# FASCICULE DE BREVET EUROPEEN

(11) **EP 4 513 276 B1**
(45) Date de publication et mention de la délivrance du brevet: **25.03.2026**
(21) Numéro de dépôt: 23192994.4
(22) Date de dépôt: 23.08.2023
(51) Int. Cl.: G04B 19/12, C04B 37/00, G04B 19/18, G04B 37/22, G04B 45/00

(54) **PROCÉDÉ DE DÉCORATION EN TROIS DIMENSIONS D'UN SUBSTRAT AFIN DE RÉALISER UNE PIÈCE D'HABILLAGE**
VERFAHREN ZUR DREIDIMENSIONALEN DEKORATION EINES SUBSTRATS ZUR HERSTELLUNG EINES VERKLEIDUNGSTEILS
METHOD FOR THREE-DIMENSIONAL DECORATION OF A SUBSTRATE IN ORDER TO PRODUCE A TRIM PART

(43) Date de publication de la demande: 26.02.2025
(73) Titulaire: Comadur S.A., 2400 Le Locle (CH)
(72) Inventeur: LE BOUDOUIL, Damien, 25800 Valdahon (FR); BOURCET, Laurent, 25470 Belfays (FR)
(74) Mandataire: ICB SA

(56) Documents cités:
- EP-A1- 1 640 822
- EP-A1- 3 035 129
- EP-A1- 3 536 826
- EP-A1- 3 839 659

## Description

### Domaine technique de l'invention

L'invention relève du domaine de la décoration de pièces d'horlogerie, de bijouterie ou d'articles de mode, et notamment de la fabrication de pièces d'habillage.

Plus particulièrement, l'invention concerne un procédé de décoration en trois dimensions d'un substrat afin de réaliser une pièce d'habillage. Ce procédé peut s'appliquer avantageusement à toute pièce d'habillage dans le domaine de l'horlogerie, de la bijouterie, des articles de mode tels que les articles de maroquinerie, de lunetterie, d'instruments d'écriture ou les appareils portables électroniques.

### Arrière-plan technologique

Dans les domaines précités, les pièces d'habillage peuvent être formées par l'assemblage d'éléments réalisés dans différents matériaux. Notamment, les pièces d'habillage comprenant un élément décoratif métallique et/ou céramique fixé à un substrat en céramique sont particulièrement attractives, bien que peu courantes du fait de la complexité de leur fabrication.

En effet, les dimensions très réduites des éléments décoratifs rendent délicate leur préhension et leur mise en position sur le substrat.

Un autre inconvénient de ce genre de pièce d'assemblage vient du fait que la tenue dans le temps de la liaison entre l'élément décoratif et le substrat n'est pas maîtrisée, dans la mesure où l'élément décoratif est fixé au substrat par chassage, par collage ou par vissage.

### Résumé de l'invention

L'invention résout les inconvénients précités en proposant, à cet effet, un Procédé de décoration en trois dimensions d'un substrat afin de réaliser une pièce d'habillage comprenant les étapes de :
- dépôt d'au moins une couche support en émail sur une zone de décor d'une surface d'habillage d'un substrat réalisé en céramique, ladite zone de décor étant destinée à recevoir un élément décoratif ;
- cuisson du substrat comprenant la couche support de sorte à entraîner la fusion de cette dernière ;
- dépôt d'un élément décoratif en matériau céramique et/ou en matériau métallique sous forme solide sur la couche support, dont le matériau est choisi de sorte que sa température de fusion soit supérieure à la température de transition vitreuse du matériau constituant la couche support ;
- scellement de l'élément décoratif sur le substrat par cuisson de sorte à former une pièce d'habillage.

Dans des modes particuliers de mise en œuvre, l'invention peut comporter en outre l'une ou plusieurs des caractéristiques suivantes, prises isolément ou selon toutes les combinaisons techniquement possibles.

Dans des modes particuliers de mise en œuvre, la cuisson du substrat et de la couche support et le scellement de l'élément décoratif sur le substrat sont réalisées dans une même étape, lorsque la température de fusion du matériau constituant l'élément décoratif est supérieure à 1000 degrés Celsius.

Dans des modes particuliers de mise en œuvre, une cavité borgne est réalisée dans le substrat de sorte à former la zone de décor et de sorte que sa forme corresponde à la forme de l'élément décoratif, ce dernier étant déposé de manière à s'étendre au-delà de ladite cavité.

Dans des modes particuliers de mise en œuvre, la cavité présente une profondeur d'au moins 0,01 mm, préférentiellement de 0,1 mm.

Dans des modes particuliers de mise en œuvre, la couche support est en émail borosilicate ou en feldspath.

Dans des modes particuliers de mise en œuvre, la couche support est en émail borosilicate de sodium.

Dans des modes particuliers de mise en œuvre, lorsque la température de fusion du matériau constituant l'élément décoratif est inférieure à 1000 degrés Celsius, à la suite de l'étape de cuisson du substrat comprenant la couche support, cette dernière est surfacée de sorte à aplanir sa surface et de sorte à égaliser son épaisseur.

Dans des modes particuliers de mise en œuvre, lors de l'étape de scellement la température à laquelle sont soumis le substrat, la couche support et l'élément décoratif est comprise entre 500 degrés Celsius et 1500 degrés Celsius.

### Brève description des figures

D'autres caractéristiques et avantages de l'invention apparaîtront à la lecture de la description détaillée suivante donnée à titre d'exemple nullement limitatif, en référence aux dessins annexés dans lesquels :

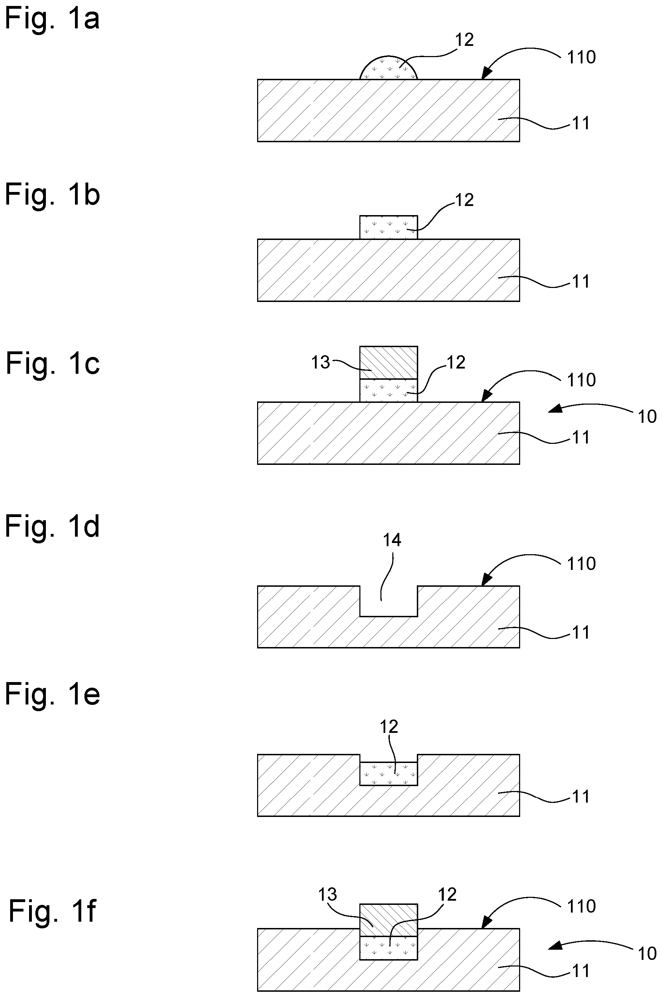

- les figures 1a à 1c représentent schématiquement une vue de section des étapes de réalisation d'un procédé de décoration d'un substrat pour la réalisation d'une pièce d'habillage selon une première variante de mise en œuvre de l'invention ;
- les figures 1d à 1f représentent schématiquement une vue de section des étapes de réalisation d'un procédé de décoration d'un substrat pour la réalisation d'une pièce d'habillage selon une seconde variante de mise en œuvre de l'invention.

On note que les figures ne sont pas nécessairement dessinées à l'échelle pour des raisons de clarté.

### Description détaillée de l'invention

La présente invention concerne un procédé de décoration en trois dimensions d'un substrat 11 afin de réaliser une pièce d'habillage 10 telle que représentée dans deux variantes de réalisation sur les figures 1c et 1f. Plus particulièrement, les étapes d'une première variante de mise en œuvre du procédé sont schématiquement représentées sur les figures 1a à 1c, et sont décrites dans un premier temps ci-dessous. Les étapes d'une seconde variante de mise en œuvre du procédé sont schématiquement représentées sur les figures 1d à 1f, et sont décrites dans un second temps.

A titre d'exemple, dans le domaine de l'horlogerie, la pièce d'habillage 10 peut former un cadran, une platine, un pont, un rouage, une masse oscillante, une lunette, une carrure, des maillons d'un bracelet ou un fermoir d'un bracelet.

Dans la première variante de mise en œuvre, le procédé comporte une étape de dépôt d'au moins une couche support 12 en émail sur une zone de décor d'une surface d'habillage 110 d'un substrat 11, comme le montre la figure 1a. La surface d'habillage 110 est destinée à être visible pour un utilisateur une fois la pièce d'habillage 10 réalisée. Par ailleurs, la zone de décor constitue une portion plane de la surface d'habillage 110 et est destinée à recevoir un élément décoratif, tel que décrit plus en détail ci-après.

Dans cette variante de mise en œuvre de l'invention, la couche support 12 est réalisée en émail borosilicate, par exemple en borosilicate de sodium, ou en feldspath. Dans le présent texte, par abus de langage et pour simplifier la lecture, le singulier est employé lorsqu'il est question de la couche support 12, toutefois la couche support 12 peut être composée d'un empilement de couches.

Avantageusement, le substrat 11 est réalisé en céramique, par exemple en une céramique dense, tel qu'en zircone, en alumine, en Grenat d'yttrium et d'aluminium aussi connu sous l'accronyme « YAG » signifiant *Yttrium Aluminium Garnet,* en saphir ou en un mélange de ces éléments.

Le substrat 11 et la couche support 12 sont ensuite cuits dans un four à une température comprise entre 500 et 1500 degrés Celsius, préférentiellement à 1000 degrés Celsius, de sorte à entraîner la fusion de la couche support 12 et son adhésion chimique au substrat 11. Grâce à sa composition, l'adhérence de la couche support 12 sur le substrat 11 est garantie à la suite de cette étape.

La couche support 12 est préférentiellement surfacée à la suite de l'étape de cuisson, comme illustré schématiquement sur la figure 1b, de sorte à aplanir sa surface visible et de sorte à égaliser son épaisseur. En effet, comme la figure 1a le représente de façon exagérée, la couche support 12 est susceptible de présenter une variation d'épaisseur. Notamment, la surface de la couche de base 12 peut présenter une succession de creux et de bosses due à un phénomène de tension de surface apparaissant lors de la cuisson de la couche de base 12, et l'épaisseur de la couche de base 12 peut être plus importante au centre de la surface d'habillage 110 que sur sa périphérie à cause de la mouillabilité de ladite couche. Par ailleurs, si la surface d'habillage 110 ne s'étend pas horizontalement, c'est-à-dire qu'elle forme une pente, la couche de base 12 peut avoir tendance à s'écouler, lors de sa cuisson, dans le sens de la pente, et donc à générer une surépaisseur, sous l'effet de la pesanteur et du fait de sa viscosité à chaud.

Le surfaçage de la couche support 12 est réalisé préférentiellement par abrasion mécanique, par exemple par meulage ou par ponçage.

Ensuite, un élément décoratif 13 est déposé sur toute ou partie de la couche support 12, comme le montre la figure 1c. Un tel élément décoratif 13 est déposé sous forme solide. L'élément décoratif 13 est avantageusement réalisé en matériau céramique et/ou en matériau métallique, le matériau dudit élément décoratif 13 étant choisi de sorte qu'il présente une température de fusion supérieure à la température de transition vitreuse du matériau constituant la couche support 12, par exemple supérieure à 600 degrés Celsius. Dans le présent texte les termes « matériau métallique » désignent tout alliage métallique, tout métal pur ou tout composite métallique.

L'élément décoratif 13 est alors scellé sur le substrat 11 par cuisson de l'ensemble constitué par le substrat 11, la couche support 12 et l'élément décoratif 13, de sorte à former une pièce d'habillage 10. La cuisson peut être réalisée à une température comprise entre 500 degrés Celsius et 1500 degrés Celsius. La température de cette cuisson correspond à une température de transition vitreuse du matériau de la couche support 12, et doit être inférieure au point de fusion du matériau constituant l'élément décoratif 13 de sorte à ne pas entraîner sa détérioration.

Une pression peut être appliquée sur l'élément décoratif 13 pendant la cuisson afin d'assurer son adhésion avec la couche support 12. Une telle pression peut être exercée par un poids posé sur l'élément décoratif 13.

La cuisson du substrat 11 et de la couche support 12 peut avantageusement être réalisée lors de l'étape de scellement de l'élément décoratif 13 sur le substrat 11 lorsque la température de fusion du matériau constituant l'élément décoratif 13 est supérieure à 1000 degrés Celsius. Ainsi, une seule étape de cuisson permet la fusion de la couche support 12 et le scellement de l'élément décoratif avec le substrat 11. Dans ce cas, il est évident que le procédé ne comprend pas d'étape de surfaçage de la couche support 12.

La seconde variante de mise en œuvre de l'invention correspond à la première variante décrite ci-dessus à l'exception de la réalisation d'une étape préliminaire, avant de déposer la couche support 12, dans laquelle une cavité 14 borgne formant la zone de décor est réalisée dans le substrat 11. En particulier la cavité 14 est réalisée à travers la surface d'habillage 110. Cette cavité 14 est donc destinée à recevoir la couche support 12 et l'élément décoratif 13 lors de leur dépôt respectif. Elle est réalisée de sorte que sa forme corresponde à la forme de l'élément décoratif 13, tel que visible sur la figure 1f. Cette cavité 14 peut être réalisée par usinage laser.

Par ailleurs, l'élément décoratif 13 est déposé de manière à s'étendre au-delà de la cavité 14.

La cavité 14 présente une profondeur d'au moins 0,01 mm, préférentiellement de 0,1 mm, de sorte à faciliter la mise en position de l'élément décoratif 13 au sein de la cavité 14.

Dans cette variante de mise en œuvre de l'invention, la couche support 12 peut être déposée sous forme de poudre dans la cavité 14.

De manière plus générale, il est à noter que les modes de mise en œuvre et de réalisation considérés ci-dessus ont été décrits à titre d'exemples non limitatifs, et que d'autres variantes sont par conséquent envisageables.

## Revendications

1. Procédé de décoration en trois dimensions d'un substrat (11) afin de réaliser une pièce d'habillage (10) comprenant les étapes de :
- dépôt d'au moins une couche support (12) en émail sur une zone de décor d'une surface d'habillage (110) d'un substrat (11) réalisé en céramique, ladite zone de décor étant destinée à recevoir un élément décoratif (13) ;
- cuisson du substrat (11) comprenant la couche support (12) de sorte à entraîner la fusion de cette dernière ;
- dépôt d'un élément décoratif (13) en matériau céramique et/ou en matériau métallique sous forme solide sur la couche support (12), dont le matériau est choisi de sorte que sa température de fusion soit supérieure à la température de transition vitreuse du matériau constituant la couche support (12) ;
- scellement de l'élément décoratif (13) sur le substrat (11) par cuisson de sorte à former une pièce d'habillage (10).

2. Procédé selon la revendication 1, dans lequel la cuisson du substrat (11) et de la couche support (12) et le scellement de l'élément décoratif (13) sur le substrat (11) sont réalisées lors d'une même étape, lorsque la température de fusion du matériau constituant l'élément décoratif (13) est supérieure à 1000 degrés Celsius.

3. Procédé selon la revendication 1 ou 2, dans lequel une cavité (14) borgne est réalisée dans le substrat (11) de sorte à former la zone de décor et de sorte que sa forme corresponde à la forme de l'élément décoratif (13), ce dernier étant déposé de manière à s'étendre au-delà de ladite cavité (14).

4. Procédé selon la revendication 3, dans lequel la cavité (14) présente une profondeur d'au moins 0,01 mm, préférentiellement de 0,1 mm.

5. Procédé selon l'une des revendications 1 à 3, dans lequel la couche support (12) est en émail borosilicate ou en feldspath.

6. Procédé selon la revendication 5, dans lequel la couche support (12) est en émail borosilicate de sodium.

7. Procédé selon la revendication 1, dans lequel lorsque la température de fusion du matériau constituant l'élément décoratif (13) est inférieure à 1000 degrés Celsius, à la suite de l'étape de cuisson du substrat (11) comprenant la couche support (12), cette dernière est surfacée de sorte à aplanir sa surface et de sorte à égaliser son épaisseur.

8. Procédé selon l'une des revendications 1 à 6, dans lequel lors de l'étape de scellement la température à laquelle sont soumis le substrat (11), la couche support (12) et l'élément décoratif (13) est comprise entre 500 degrés Celsius et 1500 degrés Celsius.

## Patentansprüche

1. Verfahren zur dreidimensionalen Dekoration eines Substrats (11) zur Herstellung eines Verkleidungselements (10), umfassend die Schritte:
- Aufbringen mindestens einer Trägerschicht (12) aus Emaille auf einen Dekorationsbereich einer Verkleidungsfläche (110) eines Substrats (11) aus Keramik, wobei der Dekorationsbereich dazu bestimmt ist, ein dekoratives Element (13) aufzunehmen;
- Brennen des Substrats (11) einschließlich der Trägerschicht (12), um diese zum Schmelzen zu bringen;
- Aufbringen eines Dekorelements (13) aus Keramik und/oder Metall in fester Form auf die Trägerschicht (12), wobei das Material so gewählt wird, dass seine Schmelztemperatur über der Glasübergangstemperatur des Materials liegt, aus dem die Trägerschicht (12) besteht;
- Versiegelung des dekorativen Elements (13) auf dem Substrat (11) durch Brennen, um ein Verkleidungsteil (10) zu bilden.

2. Verfahren nach Patentanspruch 1, wobei das Brennen des Substrats (11) und der Trägerschicht (12) und das Versiegeln des dekorativen Elements (13) auf dem Substrat (11) in einem einzigen Schritt durchgeführt werden, wenn die Schmelztemperatur des Materials, aus dem das dekorative Element (13) besteht, über 1000 Grad Celsius liegt.

3. Verfahren nach Patentanspruch 1 oder 2, bei dem im Substrat (11) eine blinde Vertiefung (14) ausgebildet wird, um den Dekorbereich zu bilden, und zwar so, dass ihre Form der Form des Dekorelements (13) entspricht, wobei dieses so aufgebracht wird, dass es über die Vertiefung (14) hinausragt.

4. Verfahren nach Patentanspruch 3, wobei die Vertiefung (14) eine Tiefe von mindestens 0,01 mm, vorzugsweise 0,1 mm, aufweist.

5. Verfahren nach einem der Patentansprüche 1 bis 3, wobei die Trägerschicht (12) aus Borosilikat-Emaille oder Feldspat besteht.

6. Verfahren nach Patentanspruch 5, wobei die Trägerschicht (12) aus Natriumborosilikat-Emaille besteht.

7. Verfahren nach Patentanspruch 1, wobei, wenn die Schmelztemperatur des Materials, aus dem das Dekorelement (13) besteht, unter 1000 Grad Celsius liegt, nach dem Brennen des Substrats (11) mit der Trägerschicht (12) diese Trägerschicht so bearbeitet wird, dass ihre Oberfläche geglättet und ihre Dicke ausgeglichen wird.

8. Verfahren nach einem der Patentansprüche 1 bis 6, wobei während des Versiegelungsschritts die Temperatur, der das Substrat (11), die Trägerschicht (12) und das dekorative Element (13) ausgesetzt sind, zwischen 500 Grad Celsius und 1500 Grad Celsius liegt.

## Claims

1. Method for the three-dimensional decoration of a substrate (11) to produce an external part (10) comprising the steps of:
- depositing at least one enamel carrier layer (12) on a decorative area of an external surface (110) of a ceramic substrate (11), said decorative area being intended to receive a decorative element (13);
- firing the substrate (11) comprising the carrier layer (12) so as to melt the latter;
- depositing a decorative element (13) made of a ceramic material and/or metallic material in solid form on the carrier layer (12), the material of which is chosen such that its melting temperature is higher than the glass transition temperature of the material constituting the carrier layer (12);
- sealing the decorative element (13) to the substrate (11) by firing to form an external part (10).

2. Method according to claim 1, wherein the firing of the substrate (11) and of the carrier layer (12), and the sealing of the decorative element (13) to the substrate (11) are carried out during the same step, when the melting temperature of the material constituting the decorative element (13) is greater than 1000 degrees Celsius.

3. Method according to either claim 1 or claim 2, wherein a blind cavity (14) is made in the substrate (11) so as to form the decorative area and such that its shape corresponds to the shape of the decorative element (13), the latter being deposited so as to extend beyond said cavity (14).

4. Method according to claim 3, wherein the cavity (14) has a depth of at least 0.01 mm, preferably 0.1 mm.

5. Method according to one of claims 1 to 3, wherein the carrier layer (12) is made of borosilicate enamel or feldspar.

6. Method according to claim 5, wherein the carrier layer (12) is made of sodium borosilicate enamel.

7. Method according to claim 1, wherein, when the melting temperature of the material constituting the decorative element (13) is below 1000 degrees Celsius, after the step of firing the substrate (11) comprising the carrier layer (12), the latter is surfaced so as to flatten its surface and even out its thickness.

8. Method according to one of claims 1 to 6, wherein, during the sealing step, the temperature to which the substrate (11), the carrier layer (12) and the decorative element (13) are subjected is between 500 degrees Celsius and 1500 degrees Celsius.
